Europäisches Patentamt

European Patent Office

Office européen des brevets

(11) Publication number: **0 246 904**
A1

(12) **EUROPEAN PATENT APPLICATION**

(21) Application number: 87304542.1

(22) Date of filing: 21.05.87

(51) Int. Cl.⁴: **B 60 J 7/08**
B 60 J 7/195

(30) Priority: 22.05.86 GB 8612499

(43) Date of publication of application:
25.11.87 Bulletin 87/48

(84) Designated Contracting States:
AT BE CH DE ES FR GB GR IT LI LU NL SE

(71) Applicant: **TUDOR WEBASTO LIMITED**
**Forge Lane Minworth Industrial Park**
**Sutton Coldfield West Midlands BT6 8AH (GB)**

(72) Inventor: **Dufft, Jurgen**
**Forge Lane, Minworth Industrial Park**
**Sutton Coldfield, West Midlands BT6 8AH (GB)**

(74) Representative: **Smart, Peter John et al**
**W.H. BECK, GREENER & CO 7 Stone Buildings Lincoln's**
**Inn**
**London WC2A 3SZ (GB)**

(54) **Opening roof assemblies for vehicles.**

(57) An opening roof assembly for a vehicle, comprises a roof panel (I) mounted to pivot about a pivot axis to open the roof, a hydraulic ram (2) for causing said panel so to pivot acting against a portion of the panel spaced from said axis, a reservoir (4) for an hydraulic fluid, and a pump connected by a conduit (3) for the fluid to said ram for pumping said fluid into said ram from said reservoir to open the roof. The reservoir may be a screen wash bottle and the hydraulic fluid may then be the screen wash water of the vehicle.

FIG. 1.

**Description**

## OPENING ROOF ASSEMBLIES FOR VEHICLES

The present invention relates to opening roof assemblies for vehicles and to vehicles incorporating such assemblies.

Vehicle sun roofs in their most basic form feature a glass panel, hinged at the forward edge of a sunroof frame and having a lever or handwheel mechanism at the rear part of the frame for lifting the glass panel for the purpose of ventilation.

The lever or handwheel mechanism is always mounted on the rear part of the sunroof for ease of construction and simplicity.

It is however, a poor location from the operator's position as the parts are above and behind his head and familiarity with the function of the roof opening mechanism is required should the driver wish to open the roof without diverting his attention from the road.

Also these opening mechanisms intrude partly into the interior of the vehicle which is visually unattractive if not dangerous in the event of an accident.

Electrically operated sun roofs employ an electric motor driving an actuating mechanism. These are complex and much more expensive than manually operated sun roofs.

The present invention provides an opening roof assembly for a vehicle, comprising a roof panel mounted to pivot about a pivot axis to open the roof, and a hydraulic ram for causing said panel so to pivot acting against a portion of the panel spaced from said axis.

Preferably, the assembly further comprises a reservoir for an hydraulic fluid, and a pump connected by a conduit for the fluid to said ram for pumping said fluid into said ram from said reservoir to open the roof.

The pump is preferably an electric pump.

The assembly preferably, further comprises control means operable selectively to activate said pump to pump said fluid into said ram to extend the ram and to pump fluid out of said ram to collapse the ram.

Preferably, the control means is operable to activate said pump to pump said fluid in a selected one of two opposite directions as desired to open and close the roof.

Alternatively, the assembly comprises a valved outlet for fluid from said ram and control means for activating said pump to extend said ram and for operating said outlet valve to collapse said ram by releasing said fluid therefrom.

The invention includes a vehicle comprising a roof assembly as described.

Preferably, the hydraulic fluid is water.

Preferably, the said reservoir is the vehicles screen washer reservoir.

In such a vehicle, a driver operated control for said roof assembly is preferably located away from the rear edge of said panel.

The invention will be illustrated by the following description of preferred embodiments with reference to the accompanying drawings in which:-

Figure I is a schematic diagram of a first assembly according to the invention, and

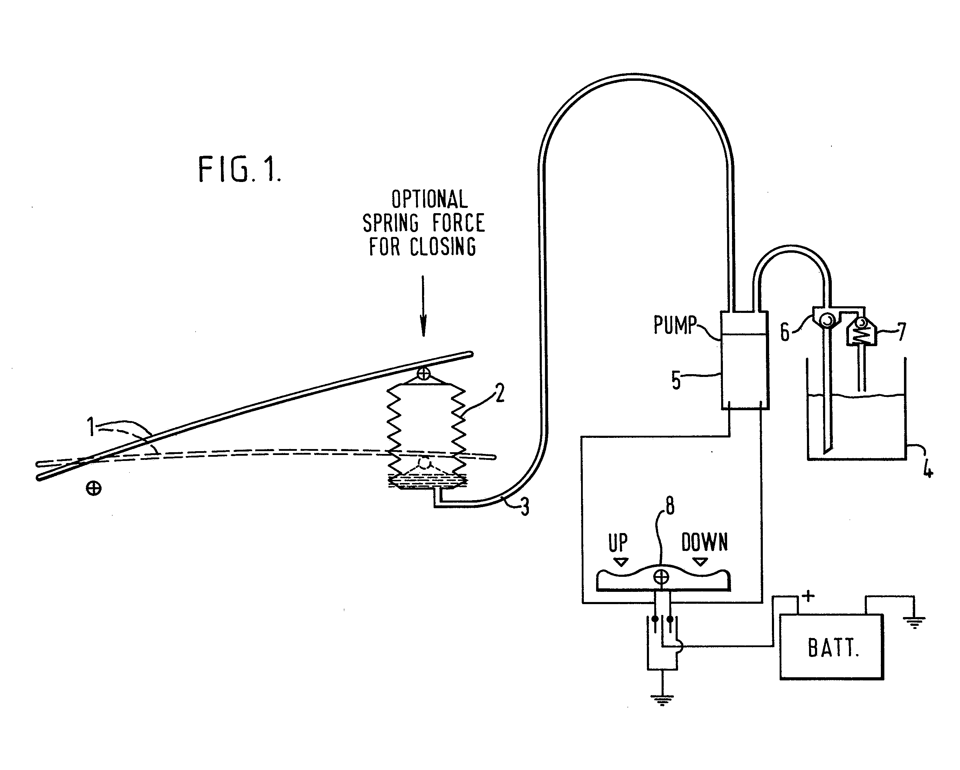

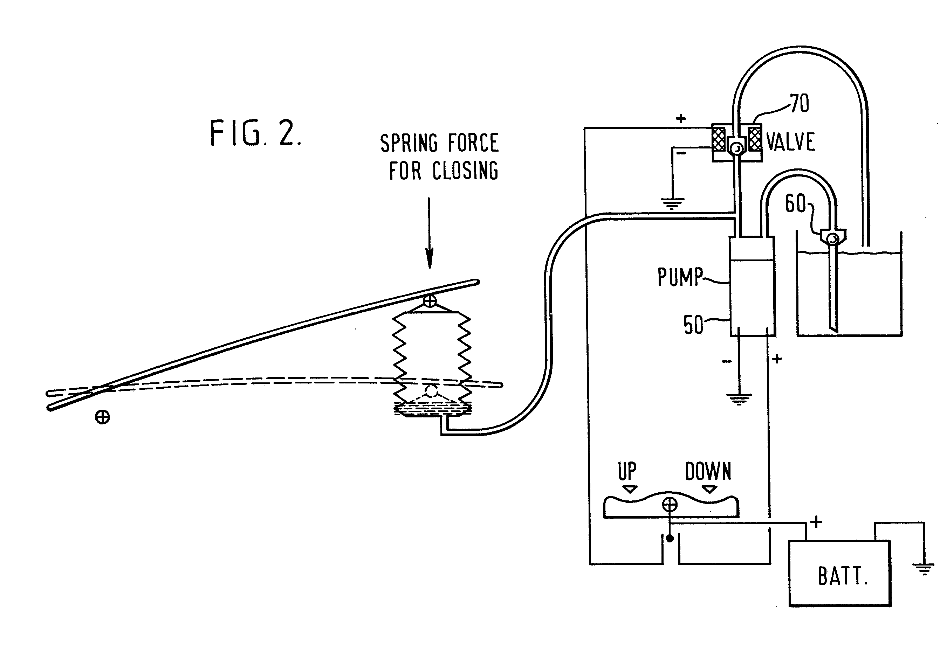

Figure 2 is a schematic diagram of a second assembly according to the invention.

All modern cars have I2 volts electrics. They also have windscreen washer pumps and attendent reservoirs for washer fluid.

The roof opening mechanism shown in Figure I consists of two conventional hinges at or adjacent the front edge of a panel I and a hydraulic ram 2 centrally located at the rear. This ram, which may take the form of an expandable bellows, a cylinder and piston or rolling diaphragm or indeed any configuration which transforms hydraulic pressure into movement, is anchored to the sunroof frame and reacts against the rear edge of the glass panel.

The ram is connected to a conventional screen washer pump 5 by a small gauge plastics tube 3 which, being not much thicker than electrical wire used in vehicles, can be routed in similar fashion to the pump. The pump is preferably located in the engine compartment. The pump suction side is terminated in the existing screen washer reservoir 4.

A non-return valve 6 and a pre-set pressure relief valve 7 are incorporated in the suction tubing.

A rocker switch 8 controlling the pump is located in the vehicle in the most convenient position.

The rocker switch allows the pump to run in either direction thus either pushing or pulling fluid.

The roof mechanism may feature also a mechanical locking catch (not shown) which comes into operation automatically when the roof is closed. This catch will be unlocked by the initial movement of the hydraulic ram, prior to lifting the roof panel.

Pushing the rocker switch into the "open" position starts the pump which sucks fluid from the reservoir via the non-return valve and pressurises the hydraulic ram. Initial movement unlocks the mechanical security latch if present and the roof panel rises. Release of the rocker switch causes the roof panel to stop in position, held by trapped fluid, further actuation of the rocker switch extends the ram and roof panel until a mechanical restraint in the ram is reached. This is the maximum opening position.

Pushing the rocker switch into the "close" position reverses the pump rotation, fluid is now sucked from the ram and returned to the reservoir via the preset return valve. This closes the roof. Additional helper springs may be arranged to close the roof or if sufficient vacuum can be generated by the pump, atmospheric pressure alone may be sufficient to fully collapse the ram and thus close the roof.

Again, during the closing sequence any release of the rocker switch will stop the pump and maintain the roof panel position.

The hydraulic ram, security catch and mechanism and any closing springs will all be located within the depth of the sunroof frame thus presenting no injury hazards. Also, the roof panel is removeable should it be desired.

An alternative arrangement shown in Figure 2 uses an unidirectional pump 50 and non-return valve 60 to open the roof and a solenoid dump valve 70 to release the pressurised fluid back to the reservoir.

Closing springs are required in this arrangement, as shown in Figure 2.

The illustrated embodiments offer a truly stepless, almost silent and ergonomically perfect mode of operation.

## Claims

1. An opening roof assembly for a vehicle, comprising a roof panel mounted to pivot about a pivot axis to open the roof, characterised in that the assembly comprises an hydraulic ram for causing said panel so to pivot acting against a portion of the panel spaced from said axis.

2. An assembly as claimed in Claim 1, further comprising a reservoir for an hydraulic fluid, and a pump connected by a conduit for the fluid to said ram for pumping said fluid into said ram from said reservoir to open the roof.

3. An assembly as claimed in Claim 2, wherein the pump is an electric pump.

4. An assembly as claimed in Claim 2 or Claim 3, further comprising control means operable selectively to activate said pump to pump said fluid into said ram to extend the ram and to pump fluid out of said ram to collapse the ram.

5. An assembly as claimed in Claim 4, wherein the control means is operable to activate said pump to pump said fluid in a selected one of two opposite directions as desired to open and close the roof.

6. An assembly as claimed in Claim 2 or Claim 3, further comprising a valved outlet for fluid from said ram and control means for activating said pump to extend said ram and for operating said outlet valve to collapse said ram by releasing said fluid therefrom.

7. A vehicle comprising a roof assembly as claimed in any preceding claim.

8. A vehicle as claimed in Claim 7 wherein a driver operated control for said roof assembly is located away from the rear edge of said panel.

FIG.1.

OPTIONAL
SPRING FORCE
FOR CLOSING

PUMP

UP    DOWN

BATT.

FIG. 2.

SPRING FORCE
FOR CLOSING

70

VALVE

60

PUMP

50

+

UP    DOWN

BATT.

0246904

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 114 501 (WEBASTO) <br> * Page 5, line 20 - page 6, line 18; page 7, line 8 - page 8, line 4; figures 2,3 * <br> --- | 1,8 | B 60 J 7/08 <br> B 60 J 7/195 |
| Y | US-A-3 622 197 (VOGELEI) <br> * Column 5, lines 38-58; figures 1,3,9 * <br> --- | 1,8 | |
| Y | DE-B-1 141 198 (DAIMLER-BENZ) <br> * Column 3, lines 47-68; figure 1 * | 1 | |
| A | <br> --- | 2 | |
| Y | DE-A-2 351 270 (WEBASTO) <br> * Page 2, lines 13-30; figures 1-3 * <br> --- | 1 | TECHNICAL FIELDS SEARCHED (Int. Cl.4) |
| A | DE-C-3 432 533 (FARMONT) <br> * Column 2, lines 43-67; figures 1-3 * <br><br> ----- | 1 | B 60 J |

The present search report has been drawn up for all claims

| Place of search | Date of completion of the search | Examiner |
|---|---|---|
| THE HAGUE | 26-08-1987 | AYITER I. |